Europäisches Patentamt

European Patent Office

Office européen des brevets

(11) Publication number: **0 163 739 B1**

# EUROPEAN PATENT SPECIFICATION
## published in accordance with Art. 158(3) EPC

(45) Date of publication of patent specification: **27.02.91**    (51) Int. Cl.⁵: **C01G 25/00**

(21) Application number: **84903994.6**

(22) Date of filing: **05.11.84**

(86) International application number:
**PCT/JP84/00530**

(87) International publication number:
**WO 85/01933 (09.05.85 85/11)**

(54) PROCESS FOR PREPARING FINE PARTICLES OF.

(30) Priority: **04.11.83 JP 206944/83**

(43) Date of publication of application:
**11.12.85 Bulletin 85/50**

(45) Publication of the grant of the patent:
**27.02.91 Bulletin 91/09**

(84) Designated Contracting States:
**DE FR GB NL**

(56) References cited:
**DE-A- 1 925 730**

(73) Proprietor: **SONY CORPORATION**
**7-35 Kitashinagawa 6-Chome Shinagawa-ku Tokyo 141(JP)**

(72) Inventor: **UEDAIRA, Satoru**
**Sony Corporation 7-35, Kitashinagawa 6-chome**
**Shinagawa-ku Tokyo 141(JP)**
Inventor: **SUZUKI, Masayuki**
**Sony Corporation 7-35, Kitashinagawa 6-chome**
**Shinagawa-ku Tokyo 141(JP)**
Inventor: **YAMANOI, Hiroshi**
**Sony Corporation 7-35, Kitashinagawa 6-chome**
**Shinagawa-ku Tokyo 141(JP)**

Inventor: **TAMURA, Hidemasa**
**Sony Corporation 7-35, Kitashinagawa**
**6-chome**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to methods of manufacturing $Ba(Zr_xTi_{1-x})O_3$ solid solution fine powder suitable for use as a dielectric material.

Such fine powders are required, for example, for ceramic capacitors of small size, light weight and large capacitance, operable at high frequencies. To make thin and uniform ceramic layers, the dielectric material used must be formed into a fine powder, this also enabling a low sintering temperature to be used. Such fine powders can also form the raw material for electrostriction material, piezoelectric material and transparent ceramic material.

As one such dielectric material, there is known barium titanate and barium zirconate solid solution, $Ba(Zr_xTi_{1-x})O_3$ (hereinafter simply referred to as BZT or BZTx) where x represents the mol % of Zr and $0 < x < 1$. To produce this solid solution, a solid phase reaction has been carried out using $BaCO_3$, $ZrO_2$ and $TiO_2$ or $BaTiO_3$ and $BaZrO_3$ as the starting materials. When the BZT solid solution produced by this solid phase reaction is granulated after the solid solution has been calcined, impurities such as $Al_2O_3$ are inevitably incorporated. Moreover, there are problems that moulding becomes non-uniform due to the non-uniform particle diameter of the granulated solid solution fine powder, and that porosity occurs after calcination. Also, although the sintering is dominated by diffusion, the solid solution uniformity of Zr and Ti is poor.

Many attempts have been made to overcome these problems, for example by using a metal alkoxide method as disclosed in Japanese examined patent application No. 58/2220. However, this method uses very expensive starting materials, and is difficult to practice.

It has also been proposed (GB-A-1 225 719) to form calcium zirconate impregnated with barium titanate at high temperature using a mix muller, the resulting product then being subjected to calcination.

According to the present invention there is provided a method of manufacturing $Ba(Zr_xTi_{1-x})O_3$ solid solution fine powder wherein $0 < x < 1$, said method comprising:
mixing a Zr compound, a Ti compound and a Ba salt, and said method being characterized by:
preparing an aqueous solution containing an inorganic Zr compound or a hydrolysis product thereof;
preparing an aqueous solution containing an inorganic Ti compound or a hydrolysis product thereof;
preparing an aqueous solution containing a Ba salt;
mixing said Zr and Ti solutions, adding said Ba solution, and adjusting the pH of the resulting solution to be at least 13.5; and

reacting said mixed aqueous solution near the boiling point of said resulting solution to obtain $Ba(Zr_xTi_{1-x})O_3$ solid solution fine powder.

The fine powder may be rinsed with water or hot water to remove alkali ions such as, $K^+$, $Na^+$ and $Li^+$, filtered and dried.

For the Zr compound, it is possible to use an aqueous solution made by dissolving $ZrCl_4$, $Zr(NO_3)_4$, $ZrO(NO_3)_2.2H_2O$ or $ZrOCl_2.8H_2O$ in water. Further, as the hydrolysis product of the Zr compound, it is possible to use an aqueous solution hydrolyzed by an alkaline solution such as $NH_4OH$, $LiOH$, $NaOH$ or $KOH$.

For the Ti compound, it is possible to use an aqueous solution of $TiCl_4$ or $Ti(SO_4)_2$ dissolved in water, while as the hydrolysis product of the Ti compound, it is possible to use an aqueous solution hydrolyzed by the above-described alkaline solution. However, when $Ti(SO_4)_2$ is used, the sulphate group $SO_4^{2-}$ must be removed, so that this solution is not reacted as a mere aqueous solution but is hydrolyzed by an alkali thereby to make $TiO_2.nH_2O$, rinsed well, filtered and then used.

For the Ba salt, there can be used $Ba(NO_3)_2$, $Ba(OH)_2$, $BaCl_2$ or $Ba(CH_3COO)_2$, or hydrolysis products thereof.

As the reaction condition for synthesizing BZT fine powder, it is preferably that the pH is selected to be equal to or higher than 13.5 when x is in a range of $0 < x < 0.2$, and equal to or higher than 13.7 when x is in a range of $0.2 < x < 1$.

It is preferably that the reaction temperature is selected to be equal to or higher than $80°C$ when x is in a range of $0 < x < 0.2$, equal to or higher than $90°C$ when x is in a range of $0.2 < x < 0.7$, and close to the boiling point temperature of the mixed solution when x is in a range of $0.7 < x < 1$.

The molar ratio of Ba/Zr + Ti is preferably selected to be equal to or higher than 0.7 but equal to or lower than 5, more preferably in a range of about 1 to 2.

The reaction time may be very short once the reaction begins, when x is in a range of $0 < x < 0.2$, and if it is selected to be one hour, it is possible to obtain a sufficiently high yield. The reaction time is selected to be more than twenty minutes when x is in a range of $0.2 < x < 0.7$, preferably about one hour and thirty minutes, and more than one hour when x is in a range of $0.7 < x < 1$, preferably about two hours, thus providing a sufficiently high yield.

Using methods according to this invention, BZT solid solution fine powder with good crystalline properties can be synthesized from the liquid phase. High uniformity, high purity, and high uniformity of the ratio x can be achieved. Although the prior art solid phase reaction method requires calcining and firing at high temperature, but with these wet synthesizing methods, the BZT solid solution is already made, so that the calcining process can be omitted, and the firing temperature lowered. Therefore, differences in Curie temperatures and electrostatic characteristics due to different firing temperatures can be substantially decreased and the reliability can be increased. Moreover, due to the uniform particle diameter, non-uniformity upon moulding and porosity upon sintering are decreased. As no granulating and mixing processes are necessary, there is no risk that impurities such as Fe or Al will be mixed into the fine powder, and hence scattered electrostatic characteristics due to such impurities do not occur. In addition, unlike the metal alkoxide in the alkoxide method mentioned above, the starting materials are inexpensive materials such as $TiCl_4$, $ZrCl_4$ or $Ba(NO_3)_2$.

The invention will now be described by way of example with reference to the accompanying drawings, in which:

Figures 1A, 1B and 1C are diagrams showing X-ray diffraction patterns of $BaTiO_3$, BZT20 and $BaZrO_3$ respectively;

Figure 2 is a graph showing time dependence on producing BZT50;

Figure 3 is a graph showing a composition state of BZT50 in its initial stage of reaction;

Figure 4 is a graph showing measured results of lattice constant with respect to BZT solid solution fine powder in which x takes various values; and

Figures 5, 6, 7 and 8 are photographs of BZT10, BZT20, BZT30 and BZT40 respectively taken by an electron microscope.

The invention will now be described in greater detail with reference to examples.

Example 1

About 200 g of $TiCl_4$ was added to stirred ice water to make an aqueous solution which was then emptied into a measuring flask to make a volume of 1000 ml. From part of this solution $TiO_2$ was precipitated by ammonia water. This precipitate was treated at about 1000°C, weighed, and then the concentration of $TiCl_4$ standard solution in the measuring flask was determined precisely, and found to be 0.956 mol/l. Similarly, about 200 g of $ZrCl_4$ was added to stirred water to make an aqueous solution of yellow colour, and this aqueous solution was emptied into a measuring flask to make a volume of 1000 ml. From part of this solution $ZrP_2O_7$ was precipitated by ammonium dihydrogenphosphate $(NH_4)_2HPO_4$. This precipitate was treated at about 1000°C, weighed, and then the concentration of $ZrCl_4$ in the measuring flask was determined precisely, and found to be 0.856 mol/l.

To make BZT20, 49.25 ml of Ti standard solution and 13.75 ml of Zr standard solution were put into a beaker to which 15.38 g of $Ba(NO_3)_2$ was added and then dissolved completely. When there is difficulty in dissolving, the solution is heated a little, whereupon the solution easily becomes a transparent solution. Then, 5N-KOH solution, which had already been adjusted, was added to this solution to make a solution of pH 13.9, whereby the solution became a white suspension, and thereafter the total amount of solution was made to be about 400 ml. While being boiled up, this solution was stirred and then matured for about 3 hours. Decanting was carried out about ten times over a precipitate of faint yellowish-white-colour produced after having been matured using hot water, thereby to remove impurities such as alkali ions. Finally, this precipitate was filtered, separated and then dried at 90°C, so obtaining about 13 g of fine powder.

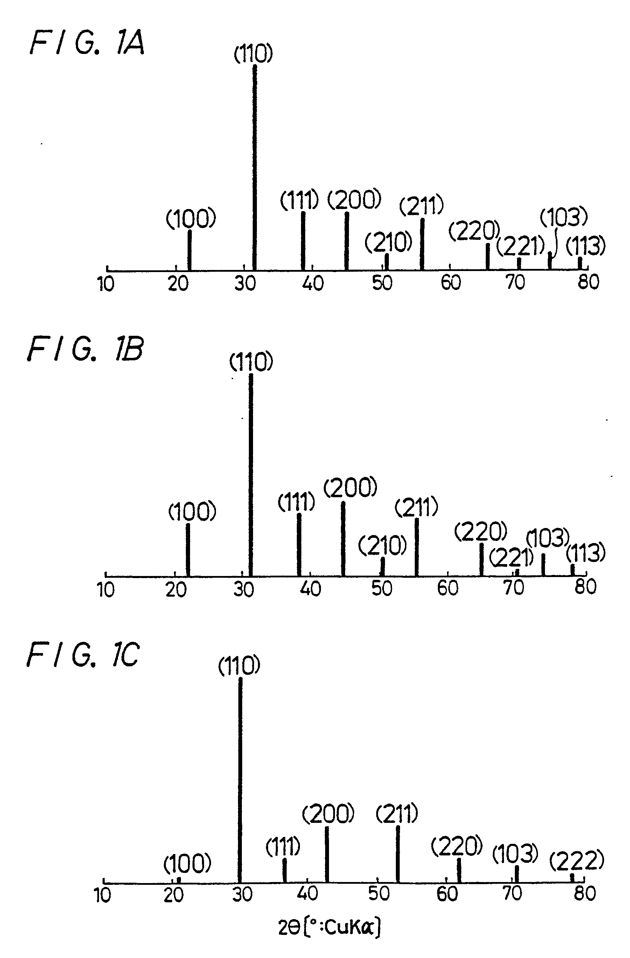

The results of X-ray analysis (Cu target and Ni filter) of the substance produced by the above-described processes are shown in Figure 1B, together with the analyzed results of $BaTiO_3$ (Figure 1A) and $BaZrO_3$ (Figure 1C) which are similarly produced by the wet synthesis method.

In this case, each diffraction strength is normalized on the basis of the diffraction peak (110). From these X-ray diffraction patterns, it will be seen that BZT is shifted a little from the peak position of $BaTiO_3$ to the peak position of $BaZrO_3$, and it was confirmed that the above-described peak position was coincident with the peak position of BZT fine powder of cubic perovskite type which was expected from ASTM cards 5-626 and 6-399.

Example 2

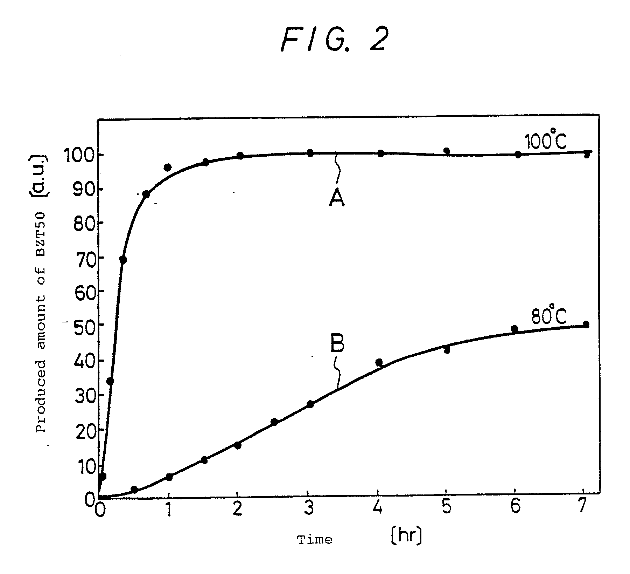

From the Ti standard solution and the Zr standard solution which were used in Example 1, 30.78 ml and 34.37 ml were respectively taken up so as to make BZT50. After adding 18.56 g of $Ba(OH)_2 \cdot 8H_2O$, this solution had 5N-KOH solution added to make a solution of pH 14. Then, the total amount of solution was made to be about 400 ml. While being boiled, this solution was stirred and parts thereof were extracted at desired times. Then, the time dependence of producing BZT fine powder was measured and the measured results are shown by a curve A in Figure 2. In this graph, the amount produced (ordinate) indicates a relative strength in which case, the peak strength at the peak position (110) is normalized as the peak position 100. The effect of changing the reaction temperature to 80°C is shown by a curve B of Figure 2. From this graph, it will be seen that at the boiling point (about 100°C), BZT is produced more easily than $BaZrO_3$, while from the data at 80°C, it is seen that BZT is more difficult to produce than $BaTiO_3$.

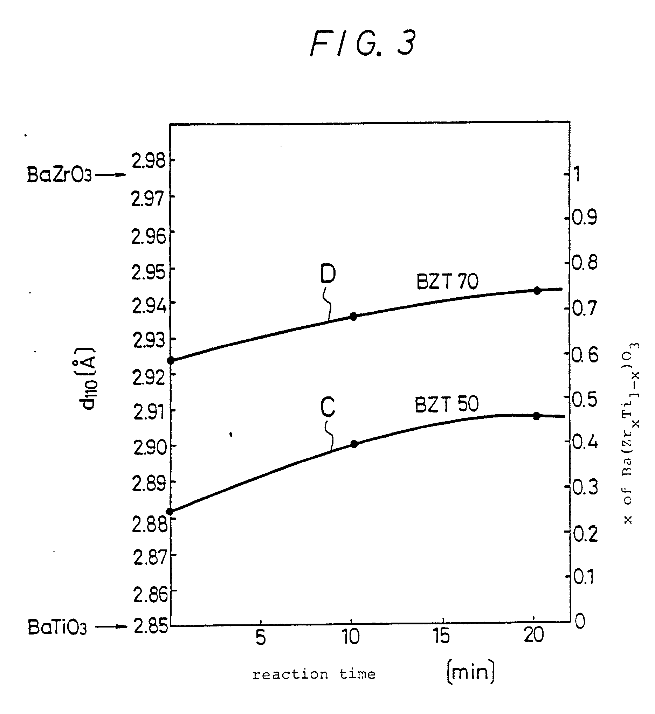

The measured composition state of BZT50, which is to be synthesized, in its initial state of reaction are shown by a curve C of Figure 3. As will be clear from this graph, during an initial period, a composition of the desired BZT50 is not made even at the boiling point temperature. Thereafter the composition shifts to the side containing a large amount of Ti, so converging to the composition of BZT50. In this graph, a lattice constant d (110) calculated from the diffraction peak position of (110) is plotted relative to time, and also a lattice constant d (110) of simple $BaTiO_3$ and $BaZrO_3$ are indicated, so that the shifting can be understood. A curve D in Figure 3 indicates data of time dependence in the early stage of reaction in which similar experiments are modified so as to make the composition become BZT70. In this case, as where the composition is shifted to the side of $BaTiO_3$ in the early stage of the reaction time, the reaction temperature is always shifted to the side of $BaTiO_3$ throughout the experiments for BZT50 at 80°C.

Example 3

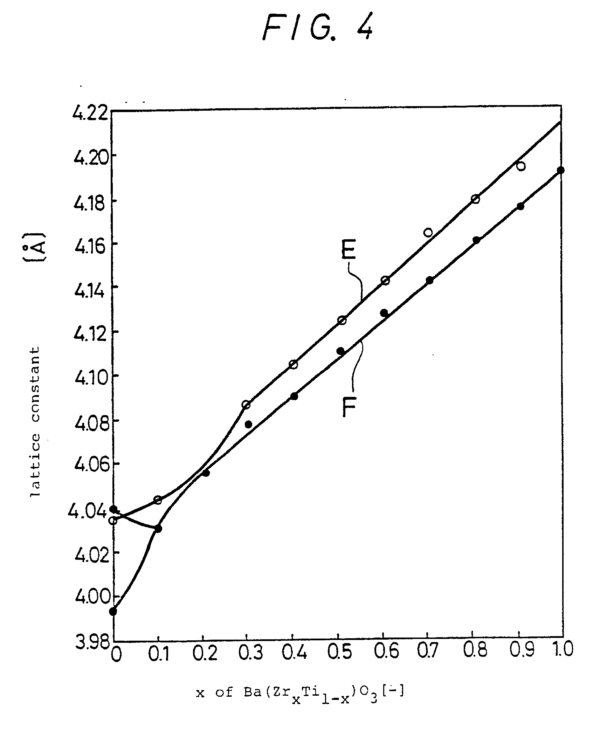

After 15.38 g of $Ba(NO_3)_2$ had been added to respective solutions derived from the Ti standard solution and the Zr standard solution used in Example 1, so as to make BZ($BaZrO_3$), BZT90, BZT80, BZT70, BZT60, BZT50, BZT40, BZT30, BZT20, BZT10 and BT($BaTiO_3$), they were adjusted to be pH 13.9 and then matured at a boiling temperature for 3 hours. A curve E of Figure 4 shows results in which lattice constants of BZT solid solution fine powder synthesized by this reaction was calculated from the Nelson-Riley extrapolation function, using a high angle side. A curve F in Figure 4 shows results in which a similar calculation method was applied to the product, which is provided by heat-treating the BZT solid solution fine powder at 1380°C for 3 hours, thereby to measure the lattice constants thereof. From the measured results of both of them, it became apparent that the lattice constant of the BZT solid solution fine powder synthesized in the wet synthesis method was substantially in accordance with Vergard's law, estimated from $BaTiO_3$ and $BaZrO_3$. On the other hand, from the observation of the diffraction peak width on the X-ray analysis chart of this fine powder, a strong broadening was not seen and thus it can be considered that there is no significant local distortion or concentration scattering of Zr and Ti.

Example 4

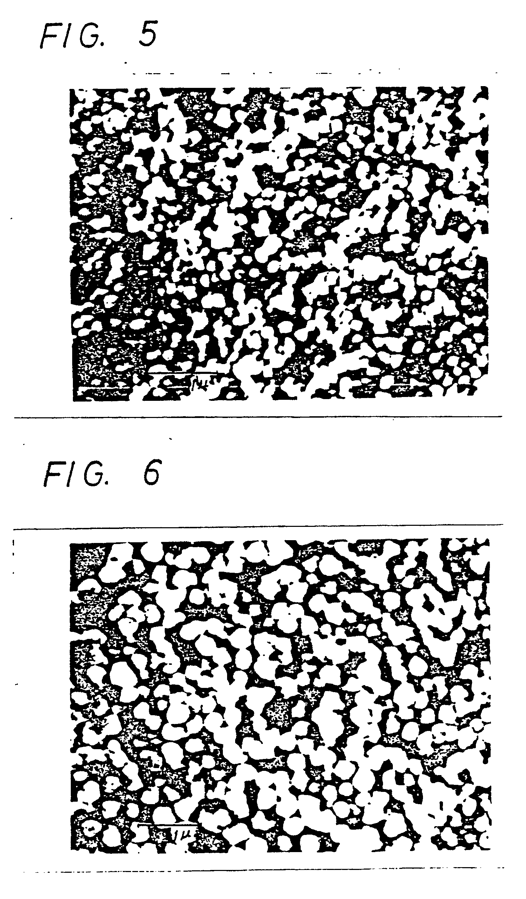

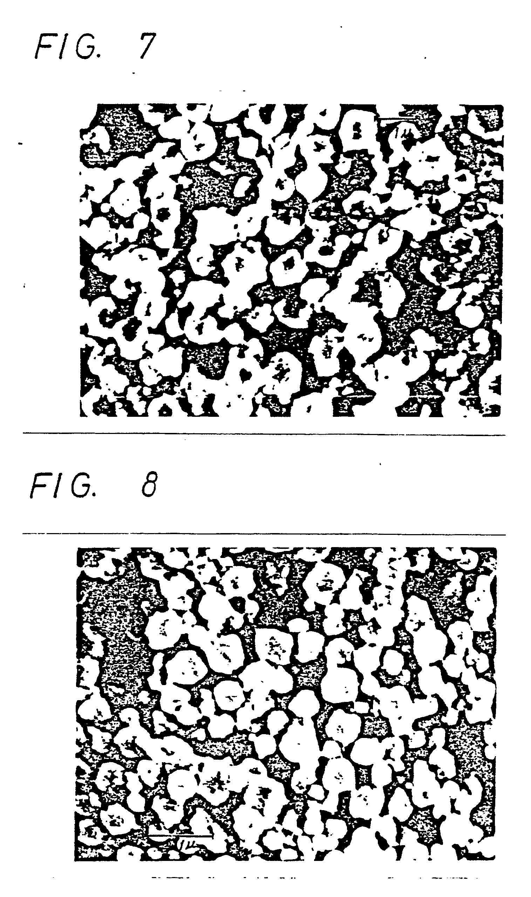

After 18.56 g of $Ba(OH)_2.8H_2O$ had been added to respective solutions derived from the Ti standard solution and the Zr standard solution used in Example 1, so as to make BZT40, BZT30, BZT20 and BZT10, they were adjusted to be pH 14 and then matured at a boiling temperature for 3 hours. Figures 5 to 8 show photographs of the BZT solid solution fine powders synthesized by this reaction taken by a scanning type electron microscope. Figures 5, 6, 7 and 8 are respectively photographs of BZT10, BZT20, BZT30 and BZT40. From these photographs, it will be seen that as the amount of Zr contained is increased, the particle diameter becomes larger. On the other hand, it is clear that when the amount of Zr is equal to or higher than 50%, the particle diameter of BZT is substantially the same as that of BZ, and is not changed substantially in a range of $0.5 < x < 1$.

## Claims

1. A method of manufacturing $Ba(Zr_xTi_{1-x})O_3$ solid solution fine powder wherein $0 < x < 1$, said method comprising:
   mixing a Zr compound, a Ti compound and a Ba salt, and said method being characterized by:
   preparing an aqueous solution containing an inorganic Zr compound or a hydrolysis product thereof;
   preparing an aqueous solution containing an inorganic Ti compound or a hydrolysis product thereof;
   preparing an aqueous solution containing a Ba salt;
   mixing said Zr and Ti solutions, adding said Ba solution and adjusting the pH of the resulting solution to be at least 13.5; and reacting said resulting aqueous solution at near the boiling point of said mixed solution to obtain $Ba(Zr_xTi_{1-x})O_3$ solid solution fine powder.

2. A method according to claim 1 wherein $0 < x \leq 0.2$.

3. A method according to claim 1 wherein the pH of said mixed solution is at least 13.7 and $0.2 < x < 1.0$.

4. A method according to claim 1, claim 2 or claim 3 wherein the molar ratio Ba/Zr + Ti lies in a range from 0.7 to 5.0.

5. A method according to any one of claims 1, 2 and 4 wherein the reaction temperature is at least 80°C and $0 < x \leq 0.2$.

6. A method according to any one of claims 1, 3 and 4 wherein the reaction temperature is at least 90°C and $0.2 < x < 0.7$.

7. A method according to any one of claims 1, 3 and 4 wherein the reaction temperature lies in the vicinity of said boiling point of said mixed solution and $0.7 \leq x < 1.0$.

8. A method according to any one of the preceding claims wherein said Zr compound is selected from $ZrCl_4$, $Zr(NO_3)_4$, $ZrO(NO_3)_2.2H_2O$ and $ZrOCl_2.8H_2O$ .

9. A method according to any one of the preceding claims wherein said Ti compound is selected from $TiCl_4$ and $Ti(SO_4)_2$.

10. A method according to any one of the preceding claims wherein said Ba salt is selected from $Ba(NO_3)_2$, $Ba(OH)_2$, $BaCl_2$ and $Ba(CH_3COO)_2$.

## Revendications

1. Une méthode de fabrication d'une poudre fine de solution solide de $Ba(Zr_xTi_{1-x})O_3$ où $0 < x < 1$, ladite méthode comprenant :
   Le mélangeage d'un composé de Zr, d'un composé de Ti et d'un sel de Ba, et ladite méthode étant caractérisée par :
   La préparation d'une solution aqueuse contenant un composé de Zr inorganique ou un produit d'hydrolyse de celui-ci ;
   La préparation d'une solution aqueuse contenant un composé de Ti inorganique ou un produit d'hydrolyse de celui-ci ;
   La préparation d'une solution aqueuse contenant un sel de Ba ;
   Le mélangeage desdites solutions de Zr et de Ti, l'addition de ladite solution de Ba et l'ajustement du pH de la solution résultante à une valeur d'au moins 13,5; et
   La réaction de ladite solution aqueuse résultante au voisinage du point d'ébullition de ladite solution mixte pour obtenir la poudre fine de solution solide de $Ba(Zr_xTi_{1-x})O_3$.

2. Une méthode selon la revendication 1, selon laquelle $0 < X < 0,2$.

3. Une méthode selon la revendication 1, selon laquelle le pH de ladite solution mixte est d'au moins 13,7 et $0,2 < x < 1,0$.

4. Une méthode selon la revendication 1, 2 ou 3, selon laquelle le rapport molaire Ba/Zr + Ti est compris dans l'intervalle de 0,7 à 5,0.

5. Une méthode selon l'une quelconque des revendications 1, 2 et 4, selon laquelle la température de réaction est d'au moins 80°C et $0 < x \leq 0,2$.

6. Une méthode selon l'une quelconque des revendications 1, 3 et 4, selon laquelle la température de réaction est d'au moins 90°C et $0,2 < X < 0,7$.

7. Une méthode selon l'une quelconque des revendications 1, 3 et 4, selon laquelle la température de réaction se trouve dans le voisinage dudit point d'ébullition de ladite solution mixte et $0,7 \leq x < 1,0$.

8. Une méthode selon l'une quelconque des revendications précédentes, selon laquelle ledit composé de Zr est choisi parmi les suivants : $ZrCl_4$, $Zr(NO_3)_4$, $ZrO(NO_3)_2,2H_2O$ et $ZrOCl_2,8H_2O$ .

9. Une méthode selon l'une quelconque des revendications précédentes, selon laquelle ledit composé de Ti est choisi parmi le $TiCl_4$ et Le $Ti(SO_4)_2$.

10. Une méthode selon l'une quelconque des revendications précédentes, selon laquelle ledit sel de Ba est choisi parmi les suivants : $Ba(NO_3)_2$, $Ba(OH)_2$, $BaCl_2$ et $Ba(CH_3COO)_2$.

## Ansprüche

1. Verfahren zur Herstellung von $Ba(Zr_xTi_{1-x})O_3$-Feinpulver als feste Lösung, mit $0 < x < 1$, bei dem eine Zr-Verbindung, eine Ti-Verbindung und ein Ba-Salz gemischt werden,
   dadurch gekennzeichnet,
   daß man eine wässerige Lösung zubereitet, die eine anorganische Zr-Verbindung oder ein Hydrolyse-Produkt von Zr enthält,
   daß man eine wässerige Lösung zubereitet, die eine anorganische Ti-Verbindung oder ein Hydrolyse-Produkt von Ti enthält,
   daß man eine wässerige Lösung zubereitet, die ein Ba-Salz enthält,
   daß man die Zr- und Ti-Lösungen mischt, die Ba-Lösung hinzufügt und den pH-Wert der resultierenden Lösung auf wenigstens 13,5 einstellt und
   daß man die resultierende wässerige Lösung in der Nähe des Siedepunkts der Lösungsmischung reagieren läßt, um Ba-$(Zr_xTi_{1-x})O_3$-Feinpulver als feste Lösung zu gewinnen.

2. Verfahren nach Anspruch 1, bei dem $0 < x \leq 0,2$ ist.

3. Verfahren nach Anspruch 1, bei dem der PH-Wert der Lösungsmischung wenigstens 13,7 beträgt und $0,2 < x < 1,0$ ist.

4. Verfahren nach Anspruch 1 , 2 oder 3, bei dem das Nolverhältnis Ba/Zr + Ti im Bereich von 0,7 bis 5,0 liegt.

5. Verfahren nach einem der Ansprüche 1 , 2 und 4, bei dem die Reaktionstemperatur wenigstens 80° beträgt und $0 < x \leq 0,2$ ist.

6. Verfahren nach einem der Ansprüche 1, 3 und 4, bei dem die Reaktionstemperatur wenigstens 90° beträgt und $0,2 < x < 0,7$ ist.

7. Verfahren nach einem der Ansprüche 1, 3 und 4, bei dem die Reaktionstemperatur in der Nähe des Siedepunkts der Lösungsmischung liegt und und $0,7 \leq x < 1,0$ ist.

8. Verfahren nach einem der vorhergehenden Ansprüche, bei dem die Zr-Verbindung ausgewählt ist aus $ZrCl_4$, $Zr(NO_3)_4$, $Zr(NO_3)_2 \cdot 2H_2O$ und $ZrOCl_2 \cdot 8H_2O$ .

9. Verfahren nach einem der vorhergehenden Ansprüche, bei dem die Ti-Verbindung ausgewählt ist aus $TiCl_4$ und $Ti(SO_4)_2$.

10. Verfahren nach einem der vorhergehenden Ansprüche, bei dem das Ba-Salz ausgewählt ist aus $Ba(NO_3)_2$, $Ba(OH)_2$, $BaCl_2$ und $Ba(CH_3COO)_2$.

*F I G. 1A*

*F I G. 1B*

*F I G. 1C*

$2\theta\,[°:CuK\alpha]$

8

# F I G. 2

# FIG. 3

# FIG. 4

lattice constant [Å]

x of $Ba(Zr_xTi_{1-x})O_3$ [-]

*FIG. 5*

*FIG. 6*

FIG. 7

FIG. 8